# EUROPÄISCHE PATENTSCHRIFT

(11) **EP 0 838 564 B1**
(45) Veröffentlichungstag und Bekanntmachung des Hinweises auf die Patenterteilung: **05.02.2003**
(21) Anmeldenummer: 97118357.9
(22) Anmeldetag: 22.10.1997
(51) Int. Cl.: E04H 15/64, E04B 1/00, A01G 9/14, E04C 2/54, E04C 2/38, E04D 12/00

(54) **Rahmenelement mit flexibler Bespannung und gebäudeartiger Aufbau mit solchen Rahmenelementen**
Framing element with flexible cover and building construction made of this framing element
Elément d'encadrement avec recouvrement flexible et bâtiment construit avec ces éléments d'encadrement

(30) Priorität: 22.10.1996 DE 19643529; 22.10.1996 DE 29618340 U
(43) Veröffentlichungstag der Anmeldung: 29.04.1998
(73) Patentinhaber: Osmers, Hans-Peter, 27327 Schwarme (DE); Lienhop, Gitta, 27327 Schwarme (DE)
(72) Erfinder: Osmers, Hans-Peter, 27327 Schwarme (DE); Lienhop, Gitta, 27327 Schwarme (DE)
(74) Vertreter: Winkler, Andreas, Dr.

(56) Entgegenhaltungen:
- DE-A- 3 003 215
- DE-A- 3 518 011
- DE-A- 3 622 159
- US-A- 3 429 075
- US-A- 4 188 764
- US-A- 5 076 033

## Beschreibung

Die Erfindung betrifft ein Rahmenelement mit einem ebenen, aus polygonförmig angeordneten, profilierten Seitenteilen zusammengesetzten Rahmen nach dem Oberbegriff des Anspruchs 1. Die Erfindung betrifft weiterhin ein Bauwerk wie beispielsweise Wintergärten, Ganzjahreszelte, Überdachungen oder Verkleidungen, die mit derartigen Rahmenelementen gebildet sind, nach dem Oberbegriff des Anspruch 15.

Bei auf- und abbaubaren, transportablen oder in anderer Hinsicht mehr oder weniger widerstandsfähigen, gebäudeartigen Anoder Aufbauten, wie etwa Überdachungen, Verkleidungen, Ganzjahres- oder Veranstaltungszelten oder auch Wintergärten besteht regelmäßig das Problem, daß derartige Aufbauten einerseits geringes Gewicht aufweisen sollen, um Aufstellung und Transport möglichst zu erleichtern, andererseits aber selbstverständlich wetterfest und solide sein müssen und dazu nach Möglichkeit wie feste Gebäude, mit Türen, Fenstern, Glasflächen etc. wirken sollen. Besonders die letztgenannte Anforderung führt häufig dazu, daß mit Glas versehene Elemente verwendet werden, was zur Folge hat, daß aufgrund des hohen Gewichts allein der Scheiben relativ schwere Tragstrukturen vorgesehen werden müssen, die den gesamten Aufwand, das Gewicht und nicht zuletzt den Preis eines derartigen Aufbaus stark in die Höhe treiben.

Auf der anderen Seite stellen die üblichen zeltartigen Aufbauten in vielfältiger Hinsicht keine ausreichende Lösung dar, da sie häufig sehr provisorisch wirken, was beispielsweise für Ausstellungszwecke nachteilig sein kann.

Aus der DE 35 18 011 A1 ist ein Wohnwagen-Vorzelt bekannt, das aus einem zerlegbaren Gerüst aus vertikalen Pfosten und horizontalen Verbindungsträgern und an diesem Gerüst lösbar befestigten einzelnen Zeltplanen-Feldern besteht, die an ihren Rändern an dem Gerüst befestigt sind.

Aus der US-5,076, 033 ist eine Rahmenstruktur aus Rahmenelementen bekannt, die mit Nuten zur Befestigung von Bespannungsstoff mittels Kedem versehen sind.

Die US-4,188,764 offenbart eine vorgefertigte Gebäudestruktur, bei der strukturelle Elemente verwendet werden, die mit einer flexiblen Bespannung versehen sind. Der Bespannungsstoff ist mit einem Kederelement in Nuten der strukturellen Elemente gehalten.

Aus der DE 30 03 215 A1 ist ein Zeltgerüst aus Profilstäben bekannt, die hinterschnittene Nuten aufweisen, in denen Zeltplanen befestigt sind.

Die Erfindung hat sich daher zur Aufgabe gestellt, ein neuartiges Rahmenelement insbesondere zur Verwendung für gebäudeartige Aufbauten wie Wintergärten etc. sowie derartige Aufbauten in verbesserter Konstruktion bereitzustellen. Diese Aufgabe wird hinsichtlich eines Rahmenelements durch Anspruch 1 und hinsichtlich eines Bauwerks durch Anspruch 15 gelöst. Vorteilhafte Ausgestaltungen der Erfindung sind in den Unteransprüchen beschrieben.

Die Erfindung wird nachfolgend anhand von Ausführungsbeispielen unter Bezugnahme auf eine Zeichnung weiter erläutert. Es zeigt:
Fig. 1 eine schematische Querschnittsansicht eines nicht zur Erfindung gehören den Rahmenelements;
Fig. 2 eine Draufsicht auf ein rechteckiges Rahmenelement;
Fig. 3 eine dreieckige Ausführungsform eines Rahmenelements;
Fig. 4 ein erfindungsgemäßes Rahmenelement;
Fig. 5 einen mit einem erfindungsgemäßen Rahmenelement aufgebanten Wintergarten;
Fig. 6 eine explosionsartige Darstellung der für den Wintergarten nach Fig. 5 verwendeten Rahmenelemente;
Fig. 7 ein bei dem Wintergarten nach Fig. 5 und 6 verwendetes Kopfkranzprofil;
Fig. 8 eine schematische Querschnittsansicht der Verbindung zweier Rahmenelemente mit einer Klemmleiste;
Fig. 9 eine andere Ausführungsform der Klemmleiste.

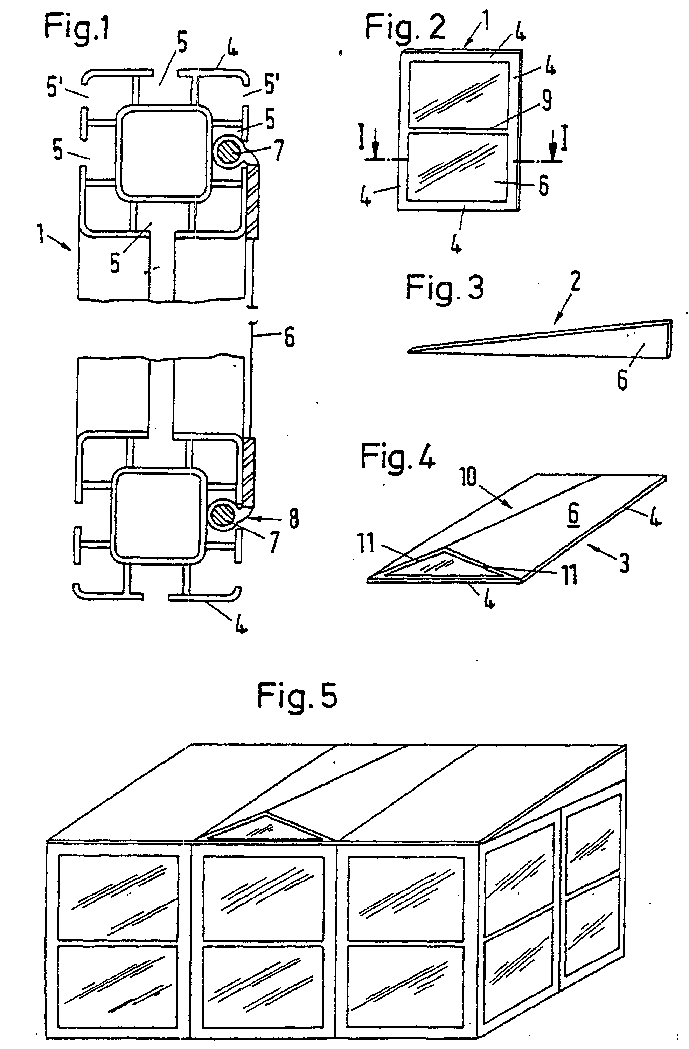

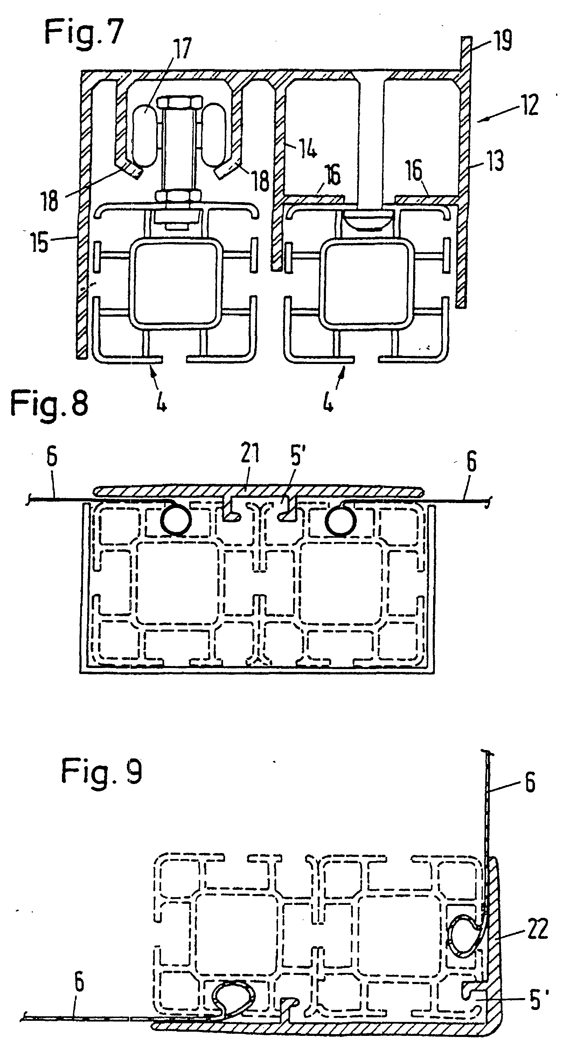

Zunächst sei auf Fig. 1 bis 4 Bezug genommen, die den Aufbau des erfindungsgemäßen Rahmenelements erläutern. Fig. 2 bis 4 zeigen Draufsichten bzw. leicht perspektivische Ansichten eines rechteckigen Rahmenelements (im ganzen mit 1 bezeichnet), eines dreieckigen Rahmenelements (im ganzen mit 2 bezeichnet) sowie eines im ganzen mit 3 bezeichneten, erfindungsgemäßen Rahmenelements, dessen Aufbau weiter unten noch erläutert wird. Jede Seitenkante bzw. jedes Seitenteil der Rahmenelemente wird in der hier beschriebenen Ausführungsform jeweils durch eine profilierte Schiene 4 gebildet, deren Querschnittsgestaltung im einzelnen aus Fig. 1 (vergrößerte Schnittansicht längs Linie I-I in Fig. 2) hervorgeht. Das Profil 4 ist im Querschnitt im wesentlichen quadratisch und weist in der Mitte einer jeden Außenfläche eine Längsnut 5 auf, deren seitliche Wände gegenüber der Öffnung in der Außenfläche zurückversetzt sind, wodurch jeweils eine Hinterschneidung gebildet wird. Darüber hinaus weist das Profil noch zwei weitere, mehr im Eckbereich liegende Längsnuten 5' auf, dessen Funktion weiter unten im Zusammenhang mit Fig. 8 bis 10 noch erläutert wird. Das Profil 4 ist in diesem Beispiel aus Aluminium gezogen, könnte allerdings auch auf andere Weise oder aus anderen Werkstoffen wie etwa Kunststoff hergestellt sein, wobei auch ganz unterschiedliche Formen möglich sind, sofern nur Längsnuten mit Hinterschneidung vorhanden sind. Die Seitenteile bzw. Profile 4 sind an den Ecken entweder auf Gehrung geschnitten oder aber stumpf aneinandergesetzt, wobei sie mit Eckwinkeln miteinander verschraubt sein können.

Das Rahmenelement 1 ist auf seiner in Fig. 1 nach rechts weisenden (Außen-)Fläche mit einer Bespannung 6 aus flexiblem Material bespannt. Die Bespannung 6, die bevorzugt aus schwer entflammbarem, ca. 650 g/m² schwerem PVC-Gewebe besteht, kann bereichsweise mit Klarsicht-Folienfenstern versehen sein und ist straff in den Rahmen eingespannt. Die straffe, nahezu trommelfellartige Spannung des Materials 6 wird dadurch erzielt bzw. aufrechterhalten, daß die Randabschnitte des Materials mit Kedern in entsprechenden Längsnuten der Seitenteile gehalten sind. Die Verbindung der Ränder des Materials 6 mit den Kedern erfolgt hierbei vorzugsweise mittels eines separaten Materialabschnitts 8, der ausgehend von einer Seite des Materials 6 um den Keder 7 herum bis zur anderen Seite des Materials 6 geführt ist und beidseitig mit dem Material 6 verschweißt ist. Um bei größeren Rahmenelementen, beispielsweise bei einer Höhe von 2 m, eine übermäßige Durchbiegung der Seitenteile 4 in Richtung zur Mitte aufgrund der Spannkraft des Materials 6 zu verhindern, können (in der Mitte des Elements) eine oder mehrere Versteifungsstrebe(n) 9 vorgesehen sein, wie Fig. 2 zeigt.

Fig. 3 und 4 zeigen Beispiele für andere Formgebungen eines Rahmenelements, wobei der grundsätzliche Aufbau indes gegenüber Fig. 1 und 2 unverändert ist. Fig. 3 zeigt ein dreieckiges Element, während in Fig. 4 ein erfindungsgemäßes Rahmenelement (Dachelement) dargestellt ist, bei dem neben den vier rechteckig angeordneten Seitenteilen 4 eine aus der durch die Seitenteile festgelegten Rahmenebene nach oben verlaufende Firststrebe 10 sowie zwei diese abstützende Giebelstreben 11 vorhanden sind, wodurch ein zur Rahmenebene senkrechtes, dreieckiges Fenster gebildet wird. Die Rahmenelemente nach Fig. 2 bis 4 sind ersichtlich nur Beispiele für die Vielfalt von Elementen, die in der vorstehend erläuterten Konstruktion je nach Anwendungsfall und geforderten Eigenschaften erstellt werden können.

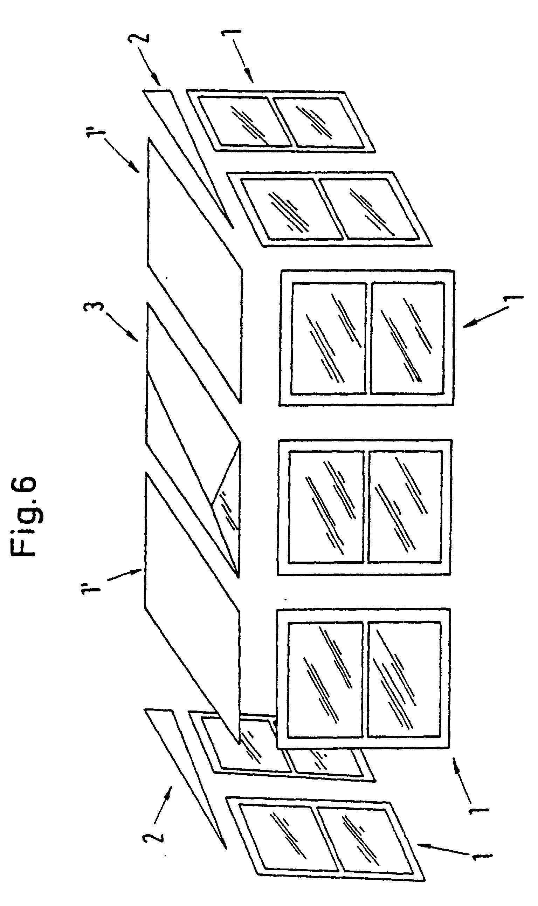

Fig. 5 und 6 zeigen als Anwendungsbeispiel einen Wintergarten, der aus Rahmenelementen aufgebaut ist. Der Wintergarten bildet hierbei einen Anbau an ein (nicht dargestelltes) bestehendes Gebäude, welches somit die Rückwand des Wintergartens bildet. Wie aus Fig. 6 hervorgeht, bestehen Wände und Dach des Wintergartens aus Rahmenelementen entsprechend Fig. 2, 3 und 4. Die Rahmenelemente 1', die die seitlichen Dachflächen bilden, entsprechen hierbei dem Rahmenelement 1 nach Fig. 2 mit dem Unterschied, daß die Bespannung aus weißem, transluzentem, PVC-beschichtetem Material besteht, während die Bespannung der senkrecht angeordneten, die Wände bildenden Elemente 1 bevorzugt aus PVC- beschichtetem Material mit verschiedenförmigen Einsätzen aus Klarsicht-Folie gefertigt ist. Soweit die Rahmenelemente 1, die die Wände des Wintergartens bilden, fest angeordnet sind, d.h. nicht zu öffnen sind, werden sie mit ihren unteren Seitenteilen in einer umlaufenden, U-förmigen, nach oben offenen Schiene gehalten, die in geeigneter Weise am Boden befestigt ist.

Soweit vorgesehen ist, daß einzelne Rahmenelemente schiebetürartig zu öffnen sind, ist in dem entsprechenden Bereich eine im Querschnitt E-förmige Bodenschiene angeordnet, die somit zwei Führungen bzw. Aufnahmenuten nebeneinander bildet und ermöglicht, daß einzelne Rahmenelemente an anderen vorbeibewegt werden können. In entsprechender Weise sind in diesem Fall die oberen Profilabschnitte der seitlichen Rahmenelemente 1 in einer im wesentlichen E-förmigen, als Kopfkranzprofil bezeichneten Schiene geführt bzw. gehalten, deren Aufbau und Funktion im einzelnen Fig. 7 zeigt. Das im ganzen mit 12 bezeichnete Kopfkranzprofil bildet zwei nach unten offene Führungen bzw. Aufnahmenuten, in denen jeweils die oberen Seitenteile 4 der senkrecht angeordneten Rahmenelemente 1 aufgenommen sind. Die Anordnung ist hierbei so getroffen, daß das zwischen den Schenkeln 13 und 14 liegende, zur Außenseite des Wintergartens weisende Rahmenelement an Anlagevorsprüngen 16 anliegt und mit Schrauben fest an dem Profil 12 fixiert ist, während das zur Innenseite des Wintergartens weisende, in Fig. 7 links dargestellte und zwischen den Schenkeln 14 und 15 angeordnete Rahmenelement an Tragrollen 17 aufgehängt und geführt ist. Die Tragrollen 17 laufen auf schräg zueinander weisenden Schienen 18, die sich vom Steg des Profils 12 aus erstrecken. Die flexible Bespannung der Rahmenelemente liegt bevorzugt zur Außenseite des Wintergartens hin und befindet sich somit in Fig. 7 jeweils auf der rechten Seite der Rahmenelemente, d.h. zwischen dem linken Profil und dem Schenkel 14 und zwischen dem rechten Profil und dem Schenkel 13.

Das Kopfkranzprofil 12 weist ferner an dem der Außenseite zugekehrten Endabschnitt des Stegs einen Haltevorsprung 19 auf, der sich gegenüber dem Schenkel 13 in entgegengesetzter Richtung erstreckt und als Montageerleichterung für die quer mit ihrer Vorderkante auf das Profil 12 aufzulegenden Dach-Rahmenelemente 1' bzw. das spezielle Dachelement 3 dient. Diese Teile werden mit einem dem dreieckigen Seitenteil 2 entsprechenden Gefälle einerseits auf eine an der Gebäudewand befestigte Wandabschlußleiste und andererseits auf das Kopfkranzprofil 12 aufgelegt, wobei der Vorsprung 19 ein Abrutschen verhindert und eine definierte Ausrichtung bei der Befestigung vorgibt.

Fig. 8 zeigt in einem Querschnitt durch nebeneinanderliegende Seitenteile von einander benachbarten Dach-Rahmenelementen 1' die Verbindung dieser Teile mit einem U-Profil 20, wodurch gleichzeitig ein Schutz vor eindringendem Regenwasser geschaffen wird.

Eine Klemmleiste 21, die wahlweise aus Kunststoff oder Aluminium hergestellt sein kann, ist als zusätzlicher Schutz in die Längsnuten 5' eingerastet. Diese Lösung findet auch bei senkrecht angeordneten Rahmenelementen Anwendung, wobei sowohl in einer Ebene liegende als auch eine Ecke bildende Rahmenelemente mit einer derartigen Klemmleiste versehen sein können. Fig. 9 zeigt eine L-förmig ausgebildete Klemmleiste 22 für eine Ecke, wobei die Schenkel der Leiste den Anschluß der Bespannung 6 sowohl optisch als auch gegen Witterungseinflüsse abdecken.

Die erfindungsgemäßen Rahmenelemente können außer für Wintergärten für unterschiedlichste dach- , wand- oder gebäudeartige An- oder Aufbauten eingesetzt werden, wobei sowohl ein Anbau an vorhandene Gebäude als auch eine freistehende Bauweise möglich ist, die zudem ohne eine zusätzliche, tragende Struktur erfolgen kann, da die Rahmenelemente aufgrund der straffen Bespannung eine erhebliche Steifigkeit besitzen. Als Beispiele für die vielfältigen Einsatzmöglichkeiten seien Ganzjahres-Zelte, Schutzdächer, Eingangsüberdachungen, Party-Zelte, Markisen, Schwimmbadüberdachungen, Balkon-Abtrennungen etc. genannt.

## Patentansprüche

1. Rahmenelement (3) mit einem ebenen, aus polygonförmig angeordneten, profilierten Seitenteilen (4) zusammengesetzten Rahmen, der ein- oder beidseitig mit einer Bespannung (6) aus flexiblem Material straff bespannt ist, wobei jedes Seitenteil (4) mindestens eine Längsnut (5) aufweist. deren Querschnittsform eine Hinterschneidung bildet und die Bespannung (6) jeweils mittels eines Keders (7) in einer Längsnut gehalten ist, **dadurch gekennzeichnet, daß** eine Firststrebe (10) von der Mitte eines Seitenteils (4) zu einem Punkt oberhalb der Mitte eines gegenüberliegenden Seitenteils verläuft und mit zwei Giebelstreben (11) zu benachbarten Ecken des Rahmenelements (3) abgestützt ist, wobei die Bespannung (6) auf der Firststrebe aufliegt.

2. Rahmenelement nach Anspruch 1, **dadurch gekennzeichnet, daß** die Längsnuten (5) benachbarter Seitenteile aneinander anschließen.

3. Rahmenelement nach Anspruch 1 oder 2, **dadurch gekennzeichnet, daß** die Seitenteile aus Metall oder Kunststoff bestehen.

4. Rahmenelement nach einem der vorangehenden Ansprüche, **dadurch gekennzeichnet, daß** jedes Seitenteil (4) drei Längsnuten (5) aufweist, die auf dem Umfang des Seitenteils und 90° gegeneinander versetzt angeordnet sind.

5. Rahmenelement nach einem der vorangehenden Ansprüche, **dadurch gekennzeichnet, daß** jedes Seitenteil (4) vier Längsnuten (5) aufweist, die auf dem Umfang des Seitenteils um 90° gegeneinander versetzt angeordnet sind.

6. Rahmenelement nach einem der vorangehenden Ansprüche, **dadurch gekennzeichnet, daß** die Längsnuten rechteckigen Querschnitt haben.

7. Rahmenelement nach einem der vorangehenden Ansprüche, **dadurch gekennzeichnet, daß** die Seitenteile (4) im Querschnitt quadratisch sind, wobei die Längsnuten (5) jeweils in der Mitte einer Seitenfläche angeordnet sind.

8. Rahmenelement nach einem der vorangehenden Ansprüche, **gekennzeichnet durch** eine quadratische oder rechteckige Grundform.

9. Rahmenelement nach Anspruch 8, **gekennzeichnet durch** ein Seitenverhältnis von 1:2.

10. Rahmenelement nach Anspruch 8 oder 9, **dadurch gekennzeichnet, daß** der Rahmen quer zu seinen längeren Seitenteilen mit einer oder mehreren Versteifungsstrebe(n) (9) versehen ist.

11. Rahmenelement nach einem der vorangehenden Ansprüche, **dadurch gekennzeichnet, daß** die Seitenteile aus Aluminium extrudiert sind.

12. Rahmenelement nach einem der vorangehenden Ansprüche, **dadurch gekennzeichnet, daß** die Bespannung (6) aus PVC-beschichtetem Gewebe besteht.

13. Rahmenelement nach einem der vorangehenden Ansprüche, **dadurch gekennzeichnet, daß** die Bespannung (6) wenigstens abschnittsweise aus glasklarem FolienMaterial besteht.

14. Rahmenelement nach einem der vorangehenden Ansprüche, **dadurch gekennzeichnet, daß** die Seitenteile (4) mit jeweils einer weiteren Längsnut (5') in zwei einander gegenüberstehenden Seitenflächen versehen sind.

15. Bauwerk, insbesondere Wintergarten, Ganzjahres-Zelt, dach- oder wandartiger Aufbau, mit mehreren Rahmenelementen (1, 2), die einen ebenen, aus polygonförmig angeordneten, profilierten Seitenteilen (4) zusammengesetzten Rahmen, der ein- oder beidseltig mit einer Bespannung (6) aus flexiblem Material straff bespannt ist, aufweisen, wobei jedes Seitenteil (4) mindestens eine Längsnut (5) aufweist, deren Querschnittsform eine Hinterschneidung bildet und die Bespannung (6) jeweils mittels eines Keders (7) in einer Längsnut (5) gehalten ist, **gekennzeichnet durch** mindestens ein Rahmenelement (3) nach einem der vorangehenden Ansprüche.

16. Bauwerk nach Anspruch 15, **dadurch gekennzeichnet, daß** jeweils zwei aneinandergrenzende, zueinander parallele Seitenteile (4) benachbarter Rahmenelemente (1, 2, 3) mit einer in benachbarte Längsnuten (5') eingreifenden, ebenen oder L-förmigen Klemmleiste (21, 22) abgedeckt sind.

17. Bauwerk nach Anspruch 15 oder 16, **dadurch gekennzeichnet, daß** zwei benachbarte, zueinander parallele Seitenteile (4) zweier nebeneinander angeordneter Dach-Rahmenelemente von einer U-förmigen Schiene (20) umfaßt sind.

18. Bauwerk nach einem der Ansprüche 15 bis 17, **dadurch gekennzeichnet, daß** vertikal angeordnete Rahmenelemente auf einer im Querschnitt E-förmigen Fußschiene gehalten sind, deren drei Schenkel nach oben weisen und dazwischen einen Aufnahmeraum für ortsfeste Rahmenelemente und benachbart dazu eine Führung für verfahrbare Rahmenelemente bilden.

19. Bauwerk nach einem der Ansprüche 15 bis 18, **dadurch gekennzeichnet, daß** ein Kopfkranzprofil (12) die oberen Seitenteile vertikal angeordneter Rahmenelemente miteinander verbindet und führt, wobei das Kopfkranzprofil im Querschnitt im wesentlichen E-förmig ist und einen Steg mit drei Schenkeln (13, 14, 15) aufweist, die dazwischen einen Aufnahmeraum für ortsfeste Rahmenelemente und benachbart dazu eine Führung für verfahrbare Rahmenelemente bilden, wobei der Steg im Bereich der Führung zwei schräg zueinander geneigte Laufschienen (18) für Rollen (17) zum Tragen und Führen von verfahrbaren Rahmenelementen trägt.

20. Bauwerk nach Anspruch 19, **dadurch gekennzeichnet, daß** die den Aufnahmeraum bildenden Schenkel (13, 14) des Kopfkranzprofils (12) mit zwei zueinander weisenden Anlagevorsprüngen (16) versehen sind.

21. Bauwerk nach Anspruch 19 oder 20, **dadurch gekennzeichnet, daß** der Steg auf seiner den Schenkeln (13, 14, 15) abgekehrten Seite in Verlängerung eines außenliegenden Schenkels (13) einen Ansatz (19) trägt.

## Claims

1. A frame element (3) with a flat frame which is made up of profiled side parts (4) disposed in the form of a polygon and which is covered tautly on one or both sides with a covering (6) of flexible material, each side part (4) having at least one longitudinal groove (5), the cross-sectional shape of which forms an undercut and the covering (6) is held in each case in a longitudinal groove by means of a weatherstrip (7), **characterised in that** a ridge strut (10) extends from the middle of a side part (4) to a point above the middle of an opposite side part and is supported by two gable struts (11) at adjacent corners of the frame element (3), the covering (6) resting on the ridge strut.

2. A frame element according to claim 1, **characterised in that** the longitudinal grooves (5) of adjacent side parts adjoin one another.

3. A frame element according to claim 1 or 2, **characterised in that** the side parts consist of metal or plastic.

4. A frame element according to any one of the preceding claims, **characterised in that** each side part (4) comprises three longitudinal grooves (5) which are disposed on the periphery of the side part with a 90° offset from one another.

5. A frame element according to any one of the preceding claims, **characterised in that** each side part (4) comprises four longitudinal grooves (5) which are disposed on the periphery of the side part with a 90° offset from one another.

6. A frame element according to any one of the preceding claims, **characterised in that** the longitudinal grooves have a rectangular cross-section.

7. A frame element according to any one of the preceding claims, **characterised in that** the side parts (4) are square in cross-section, the longitudinal grooves (5) each being disposed in the middle of a side surface.

8. A frame element according to any one of the preceding claims, **characterised by** a square or rectangular base shape.

9. A frame element according to claim 8, **characterised by** a side ratio of 1:2.

10. A frame element according to claim 8 or 9, **characterised in that** the frame is provided with one or more stiffening struts (9) transversely of its longer side parts.

11. A frame element according to any one of the preceding claims, **characterised in that** the side parts are extruded from aluminium.

12. A frame element according to any one of the preceding claims, **characterised in that** the covering (6) consists of PVC-coated fabric.

13. A frame element according to any one of the preceding claims, **characterised in that** the covering (6) consists of transparent film material at least in portions.

14. A frame element according to any one of the preceding claims, **characterised in that** the side parts (4) are each provided with another longitudinal groove (5') in two opposite side surfaces.

15. A structure, more particularly a winter garden, year-round tent, a superstructure in the form of a roof or wall, with a plurality of frame elements (1, 2) which comprise a flat frame which is made up of profiled side parts (4) disposed in the form of a polygon and which is covered tautly on one or both sides by a covering (6) of flexible material, each side part (4) comprising at least one longitudinal groove (5), the cross-sectional shape of which forms an undercut and the covering (6) is held in each case in a longitudinal groove (5) by means of a weatherstrip (7), **characterised by** at least one frame element (3) according to any one of the preceding claims.

16. A structure according to claim 15, **characterised in that** each two adjoining and parallel side parts (4) of adjacent frame elements (1, 2, 3) are covered by a flat or L-shaped clamping strip (21, 22) engaging in adjacent longitudinal grooves (5').

17. A structure according to claim 15 or 16, **characterised in that** two adjacent and parallel side parts (4) of two roof frame elements disposed side by side are enclosed by a U-shaped rail (20).

18. A structure according to any one of claims 15 to 17, **characterised in that** vertically disposed frame elements are held on a foot rail of E-shaped cross-section, the three limbs of which point upwards and form between them a reception space for fixed frame elements and adjacent thereto a guide for movable frame elements.

19. A structure according to any one of claims 15 to 18, **characterised in that** a head rim profile (12) interconnects and guides the top side parts of vertically disposed frame elements, the head rim profile being substantially E-shaped in cross-section and comprising a web with three limbs (13, 14, 15) which form therebetween a reception space for fixed frame elements and adjacent thereto a guide for movable frame elements, the web carrying, in the region of the guide, two rails (18) inclined at an angle to one another for rollers (17) for carrying and guiding movable frame elements.

20. A structure according to claim 19, **characterised in that** the limbs (13, 14) of the head rim profile (12) forming the reception space are provided with two abutment projections (16) facing one another.

21. A structure according to claim 19 or 20, **characterised in that** the web carries an attachment (19) on its side remote from one of the limbs (13, 14, 15) in extension of an outer limb (13).

## Revendications

1. Elément d'encadrement (3) avec un cadre plan, composé de parties latérales (4) profilées, disposées en forme de polygone, installées de façon tendue à partir d'un matériau flexible sur une ou deux faces avec un entoilage ou recouvrement (6), chaque partie latérale (4) présentant au moins une rainure longitudinale (6), dont la forme de section transversale forme une contre-dépouille et l'entoilage (6) étant maintenu dans une rainure longitudinale à l'aide d'un couvre-joint (7), **caractérisé en ce qu'**une entretoise de faîte (10) s'étend depuis le centre d'une partie latérale (6) vers un point situé au-dessus du centre d'une partie latérale opposée et est soutenu à l'aide de deux entretoises de pignon (11) vers des angles voisins de l'élément de cadre (3), l'entoilage (6) reposant sur l'entretoise de faîte.

2. Elément d'encadrement selon la revendication 1, **caractérisé en ce que** les rainures longitudinales (5) de parties latérales voisines se raccordent les unes aux autres.

3. Elément d'encadrement selon la revendication 1 ou 2, **caractérisé en ce que** les parties latérales sont en métal ou en matière plastique.

4. Elément d'encadrement selon l'une des revendications précédentes, **caractérisé en ce que** chaque partie latérale (4) présente trois rainures longitudinales (5) réparties sur la périphérie de la partie latérale et décalées mutuellement de 90°.

5. Elément d'encadrement selon l'une des revendications précédentes, **caractérisé en ce que** chaque partie latérale (4) présente quatre rainures longitudinales (5) réparties sur la périphérie de la partie latérale et décalées les unes les autres de 90°.

6. Elément d'encadrement selon l'une des revendications précédentes, **caractérisé en ce que** les rainures longitudinales ont une section transversale rectangulaire.

7. Elément d'encadrement selon l'une des revendications précédentes, **caractérisé en ce que** les parties latérales (4) ont une section transversale carrée, les rainures longitudinales (5) étant disposées chacune au centre d'une face latérale.

8. Elément d'encadrement selon l'une des revendications précédentes, **caractérisé par** une forme de base carrée ou rectangulaire.

9. Elément selon la revendication 8, **caractérisé par** un rapport des côtés de 1:2.

10. Elément selon la revendication 8 ou 9, **caractérisé en ce que** le cadre est muni, transversalement par rapport à ses parties latérales longues, d'une ou plusieurs entretoises de rigidification (9).

11. Elément d'encadrement selon l'une des revendications précédentes, **caractérisé en ce que** les parties latérales sont des pièces extrudées en aluminium.

12. Elément d'encadrement selon l'une des revendications précédentes, **caractérisé en ce que** l'entoilage (6) est formé d'un tissu revêtu de PVC.

13. Elément d'encadrement selon l'une des revendications précédentes, **caractérisé en ce que** l'entoilage (6) est formé d'un matériau en feuille, transparent au moins par tronçons.

14. Elément d'encadrement selon l'une des revendications précédentes, **caractérisé en ce que** les parties latérales (4) sont munies chacune d'une autre rainure longitudinale (5') dans deux faces latérales mutuellement opposées.

15. Ouvrage de construction, en particulier jardin d'hiver, tente pour toute saison, structure du genre d'un toit ou d'une paroi avec une pluralité d'éléments d'encadrement (1, 2) qui présentent un cadre plan composé de parties latérales (5) profilées disposées en forme de polygone, cadre couvert de façon tendue sur une ou deux faces par un entoilage (6) en matériau flexible, chaque partie latérale (4) présentant au moins une rainure longitudinale dont la forme de section transversale forme une contre-dépouille et l'entoilage (6) étant maintenu chaque fois au moyen d'un couvre joint (7) dans la rainure longitudinale (5), **caractérisé par** au moins un élément d'encadrement (3) selon l'une des revendications précédentes.

16. Ouvrage de construction selon la revendication 15, **caractérisé en ce que** chaque fois deux parties latérales (4) limitrophes l'une à l'autre, parallèles entre elles, d'éléments d'encadrement (1, 2, 3) voisins sont couvertes à l'aide d'une bande de serrage (21, 22) plane ou en forme de L, s'engageant dans des rainures longitudinales (5') voisines.

17. Ouvrage de construction selon la revendication 15 ou 16, **caractérisé en ce que** deux parties latérales voisines, parallèles l'une à l'autre, de deux éléments d'encadrement de toit disposés l'un à côté de l'autre sont entourées par une glissière (20) en forme de U.

18. Ouvrage de construction selon l'une des revendications 5 à 7, **caractérisé en ce que** les éléments d'encadrements disposés verticalement sont maintenus sur une glissière de pied à section transversale en forme de U, dont trois branches sont tournées vers le haut et forment, entre elles, un espace de logement pour des éléments d'encadrement localement fixes et, au voisinage de cela, forment un guidage pour des éléments d'encadrement déplaçables.

19. Ouvrage de construction selon l'une des revendications 5 à 8, **caractérisé en ce qu'**un profil à couronne de tête (12) relie ensemble et guide les parties latérales supérieures d'éléments d'encadrement disposés verticalement, le profil en couronne de tête ayant, en section transversale, une forme sensiblement en forme de E et présentant une nervure avec trois branches (14, 15) qui forment entre elles un espace de logement pour des éléments d'encadrement localement fixes et, au voisinage de cela, un guidage pour des éléments d'encadrement mobiles, la nervure portant, dans la zone du guidage, deux glissières de défilement (18) inclinées obliquement l'une par rapport à l'autre pour des galets (17), afin de porter et de guider des éléments d'encadrement déplaçables.

20. Ouvrage de construction selon la revendication 19, **caractérisé en ce que** les branches (13, 14) formant l'espace de logement du profil de couronne de tête (12) sont munies de deux saillies d'appui (16) tournées l'une vers l'autre.

21. Ouvrage de construction selon la revendication 19 ou 20, **caractérisé en ce que** la nervure porte, sur son côté opposé aux branches (13, 14, 15), dans le prolongement d'une branche (13) extérieure, un appendice (19).
